# EUROPEAN PATENT SPECIFICATION

(11) **EP 3 639 057 B1**
(45) Date of publication and mention of the grant of the patent: **03.11.2021**
(21) Application number: 17909091.5
(22) Date of filing: 11.05.2017
(51) Int. Cl.: G01S 17/10, G01S 17/00, G01S 17/89, G01S 7/481, G01S 17/42

(54) **TIME-OF-FLIGHT APPARATUS**
FLUGZEITVORRICHTUNG
APPAREIL DE TEMPS DE VOL

(43) Date of publication of application: 22.04.2020
(73) Proprietor: Huawei Technologies Co., Ltd., Longgang District Shenzhen, Guangdong 518129 (CN)
(72) Inventor: DUMAIS, Patrick, Ottawa, Ontario K1Y 4E2 (CA)
(74) Representative: Maiwald Patent- und Rechtsanwaltsgesellschaft mbH
(86) International application number: PCT/CA2017/050566
(87) International publication number: WO 2018/205006

(56) References cited:
- US-A- 5 870 181
- US-A1- 2006 227 317
- US-A1- 2006 244 945
- US-A1- 2010 182 587
- US-A1- 2010 182 587
- US-A1- 2015 378 241
- US-B1- 6 563 101
- US-B1- 6 563 101
- MCMANAMON P F ET AL: "OPTICAL PHASED ARRAY TECHNOLOGY", PROCEEDINGS OF THE IEEE, IEEE. NEW YORK, US, vol. 84, no. 2, February 1996 (1996-02), pages 268-298, XP000555865, ISSN: 0018-9219, DOI: 10.1109/5.482231
- HULME J C ET AL: "Fully integrated hybrid silicon free-space beam steering source with 32-channel phased array", PROCEEDINGS OF SPIE/ IS & T,, vol. 8989, 8 March 2014 (2014-03-08), pages 898907-898907, XP060035951, DOI: 10.1117/12.2044820 ISBN: 978-1-62841-730-2

## Description

### TECHNICAL FIELD

This disclosure relates to the field of optical sensing, and in particular to time-of-flight systems.

### BACKGROUND

Lidar systems generate a pulse, typically from a laser, and utilize reflected light for imaging, detection and ranging. Lidar systems have many applications, including use in sensors for automated automotive applications. Lidar is sometimes also spelled LIDAR as an acronym for either Light Detection and Ranging or Laser Radar.

Autonomous vehicles require a multitude of sensors, and lidar based sensors can provide good range, accuracy, and resolution.

Solid-state lidar is an emerging technology, which uses optical phased arrays as an emitter. Phased arrays are well known in the context of radar and microwave transmission. In the optical domain, the design and fabrication of efficient 2D arrays remains a considerable technical challenge. For example, the required emitter spacing for phased arrays emitting a single diffracted beam is smaller than can be comfortably designed and fabricated, due to the wavelengths involved (e.g., 0.4 to 1.6 micrometers). One solution is to use so-called thinned phased arrays operating in higher diffraction orders. Thinned phased arrays have larger spacing between emitters. A disadvantage of thinned phased arrays is that they emit multiple beams, which reduces the power efficiency of the central beam. Further, the multiple beams create multiple reflections from an object to be ranged by a lidar scanner, which interferes with a receiver's ability to accurately range the object.

Accordingly, there is a need for a system and method that at least partially addresses one or more limitations of the prior art. In particular, there is a need for a lidar system which is inexpensive, is not excessive in size, and can accurately range objects.

This background information is provided to reveal information believed by the applicant to be of possible relevance to the present invention. No admission is necessarily intended, nor should be construed, that any of the preceding information constitutes prior art against the present invention.

US 2010/0182587 A1 describes a laser detection and ranging system that includes a beam forming element that is optically coupled to a light source. The light source generates a light beam that is split by the beam forming element into multiple beamlets and directed toward a target. At least one of the beamlets are reflected from the target as backscattered light that is received by a detector that generates a signal indicative of a characteristic of the target.

US 5 870 181 A describes a laser radar (LADAle) including an acoustic-optical (AO) laser scanner for deflecting a pulsed laser beam through a plurality of angles, means for ditfracting the deflected laser beam from the acoustic-optical laser scanner into a plurality of laser beams and a linear detector array including a plurality of detector elements respectively positioned to receive reflected energy from the respective plurality of laser beams such that a line scan is produced composed of a plurality of pixels.

MCMANAMON P F ET AL: "OPTICAL PHASED ARRAY TECHNOLOGY", PROCEEDINGS OF THE IEEE, vol. 84, no. 2, February 1996, pages 268-298, relates to an optical phased arrayfor steering monochromatic laser radar beams.

US 6 563 101 B1 describes an image tracking device that includes an array of light-sensitive elements.

HULME J C ET AL: "Fully integrated hybrid silicon free-space beam steering source with 32-channel phased array", PROCEEDINGS OF SPIE1 IS & T, vol. 8989, 8 March 2014 (2014-03-08), pages 898907-898907, relates to free-space beam steering using optical phased arrays is a promising method for implementing free-space cormnunication links and Light Detection and Ranging (LIDAR) without the sensitivity to inertial forces and long latencies which characterize moving parts.

### SUMMARY

Time-of-flight lidar systems can be used to detect and range external objects. The "time of flight" between the transmission of a pulse and detection of the corresponding scattered light is indicative of a distance to the point from which the light was scattered, while the direction of the transmitter beam (as determined by the steering device) can be used to determine a direction to the point from which the light was scattered.

The invention is defined by the independent claims. Aspects of the disclosure provide an apparatus and method used for time-of-flight lidar applications, in which a plurality of photodetectors is provided to receive scattered light from a plurality of beams.

An aspect of the disclosure is directed to a time-of-flight apparatus including a transmitter and a receiver. The transmitter includes a laser for providing a laser pulse and an optical phased array coupled to the laser for receiving the laser pulse and providing a plurality of beams which fan out from the optical phased array. The receiver includes an optical receiving unit for receiving scattered light from the plurality of beams and a photodetector array coupled to the optical receiving unit. The photodetector array includes a plurality of photodetectors such that at least one particular photodetector of the photodetector array is disposed for receiving scattered light from each particular beam of the plurality of beams. In some embodiments, the optical phased array is configured for steering the plurality of beams. It is noted that the plurality of beams are steered to scan a field of view of the time-of-flight apparatus. In some embodiments, the plurality of beams is shaped as a fan of beams extending from the optical phased array. In some embodiments, the optical phase array is configured for steering the fan of beams. In some embodiments, at least one particular photodetector of the photodetector array is disposed for receiving scattered light from each particular beam of the fan of beams while the fan of beams is steered by the optical phased array. In some embodiments, the fan of beams is one-dimensional and the photodetector array is one one-dimensional. In some embodiments, the fan of beams is two-dimensional and wherein the photodetector array is one two-dimensional. In some embodiments, the photodetector array has a varying pitch of photodetectors corresponding to the fan of beams, such that the photodetectors form a pincushion pattern. In some embodiments, the optical phased array is configured for varying a pointing angle of the fan of beams in a single plane. In some embodiments, the optical phased array is configured for varying a pointing angle of the fan of beams in two mutually perpendicular planes. In some embodiments, the optical receiving unit comprises a lens. In some embodiments, the optical receiving unit comprises a plurality of lenses optically coupled to the photodetector array. In some embodiments, the photodetector array has a varying pitch of the photodetectors to match the fan of beams. In some embodiments, the optical phased array comprises a thinned optical phase array. In some embodiments, the optical phased array comprises an integrated photonic chip including an array of emitters and an array of tunable phase elements, wherein each tunable phase element is coupled to a particular one of the emitters. In some embodiments, the time-of-flight apparatus includes a controller coupled to the transmitter and configured to cause the laser to transmit the laser pulse and to cause the optical phased array to steer the fan of beams through a predetermined pointing angle range. In some embodiments, the controller is configured to receive signals from individual photodetectors of the photodetector array, wherein the signals correspond to the scattered light from each particular beam of the fan of beams. In some embodiments, the controller is further configured to determine, from the corresponding signals, arrival times of the scattered light from each particular one of the beams.

Another aspect of the disclosure is directed to a method of time-of-flight ranging. The method includes providing a laser pulse to an optical phased array to provide a plurality of beams which fan out from the optical phased array. The method further includes receiving scattered light from the plurality of beams by a photodetector array comprising a plurality of photodetectors, wherein at least one particular photodetector of the photodetector array is disposed for receiving scattered light from each particular beam of the plurality of beams. In some embodiments, the method further includes for each photodetector, receiving a detector signal in response to the photodetector receiving the scattered light, and then converting arrival times of each detector signal to distance. In some embodiments the plurality of beams is shaped as a fan of beams. In some embodiments the method further includes steering the fan of beams.

The foregoing and other objects, features, aspects and advantages of the present invention will become more apparent from the following detailed description, taken in conjunction with the accompanying drawingswhich description is by way of example only.

### BRIEF DESCRIPTION OF DRAWINGS

For a more complete understanding of this disclosure, reference is now made to the following brief description, taken in connection with the accompanying drawings and detailed description, wherein like reference numerals represent like parts.
Figure 1 is a block diagram of a lidar system according to an embodiment.
Figure 2 illustrates a simplified view of the system of Figure 1 imaging an external object according to an embodiment.
Figure 3 illustrates a scanning operation, according to an embodiment.
Figure 4 is a 3D schematic view of a thinned optical phase array and a photodetector array, according to an embodiment.
Figure 5 illustrates a photodetector array detecting scattered light from multiple beams emitted by a thinned optical phase array, according to an embodiment.
Figure 6 is a block diagram of another lidar system according to another embodiment
Figure 7 illustrates one example of a non-uniform detector array, according to an embodiment.
Figure 8 illustrates another embodiment which utilizes a polar grid detector array, according to an embodiment.
Figure 9 illustrates an apparatus including a one-dimensional optical phased array, and a one-dimensional photodetector array, according to an embodiment.
Figure 10 illustrates a method for time-of-flight ranging executed by a controller, according to an embodiment.

### DESCRIPTION OF EMBODIMENTS

Embodiments will be discussed with reference to example "time-of-flight" lidar systems, for example for automated vehicle applications such as self-driving cars or drones. Such systems utilize a lidar sensor which generates laser pulses, and senses the environment by measuring and timing the reflected pulses.

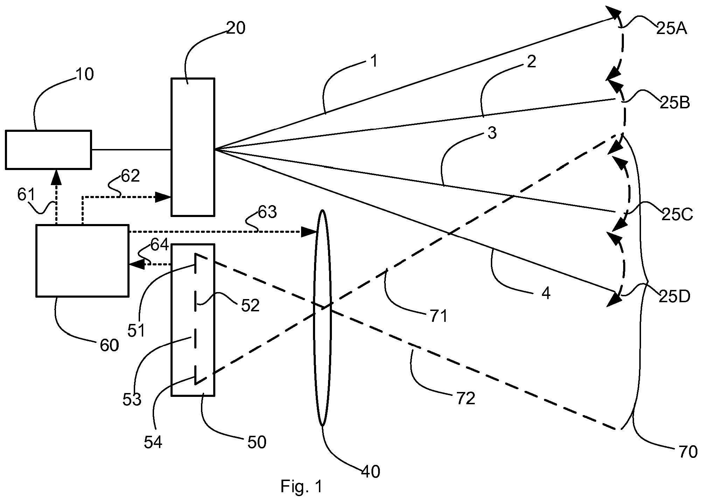

Figure 1 illustrates a time-of-flight lidar apparatus, according to an embodiment. An embodiment provides a lidar scanner having a transmitter and a receiver. The transmitter includes a laser 10 and an optical phased array 20 which operates as an emitter/scanner for imaging an external object (not shown). The receiver includes an optical receiving unit 40 and a photodetector array 50 which includes a plurality of photodetectors 51, 52, 53, 54. In some embodiments the optical phased array 20 is a thinned optical phased array. In a thinned optical phased array, a pitch, defined as center-to-center distance between neighboring emitters, is larger than half the wavelength of the light impinging on the array, such that the light diffracted by the array produces a number of beams depending on the pitch of the optical phased array 20. Accordingly, optical phased array 20 receives a laser pulse from the laser 10 and provides a plurality of beams which fan out from the optical phased array 20. In Figure 1, four such beams 1, 2, 3, 4 are illustrated, but it should be appreciated that more than 4 beams can be emitted, depending on the configuration of the optical phased array 20.

In some embodiments, the optical receiving unit 40 includes imaging optics, such as one or more lenses optically coupled to the photodetector array 50. The optical receiving unit 40 directs scattered light reflected from the external object to produce an image of the lidar scanner field-of-view 70 on the photodetector array 50. The field of view 70 is bounded by dashed lines 71, 72, which depend on the optical receiving unit 40. It should be appreciated that the figure is not drawn to scale. In practice, an external object to be scanned would be sufficiently far from the apparatus that the field of view 70 would include an object scanned by the beams 1, 2, 3, 4. Further, in some embodiments the optical receiving unit 40 can steer/focus light scattered (i.e., reflected) from an external object from all 4 beams 1, 2, 3, 4.

The apparatus further includes a controller 60 which controls the laser 10 via signaling link 61 and the optical phased array 20 via a signaling link 62. Further, in some embodiments the controller can control the optical receiving unit 40 via a signaling link 63. The controller also processes the imaging data received from the individual photodetectors 51, 52, 53, 54 received via a signaling link 64.

In some embodiments, the number of photodetectors in the photodetector array is configured to be equal to the number of beams emitted by the thinned phased array and corresponding to diffraction lobes as explained above. In other embodiments, at least one particular photodetector of the photodetector array is disposed for receiving scattered light from each particular one of the beams of the plurality of beams. In some embodiments, the number of photodetectors is greater than the number of beams emitted by the thinned phase array. It is noted that the beams considered herein are beams within the field of view 70 of the optical receiving unit 40. Other beams, at larger angles, may be present depending on implementation of a ranging apparatus; however, since these beams are outside of the field of view 70 of the optical receiving unit 40, they do not contribute to forming an image of an object being ranged, and therefore are omitted from the following description.

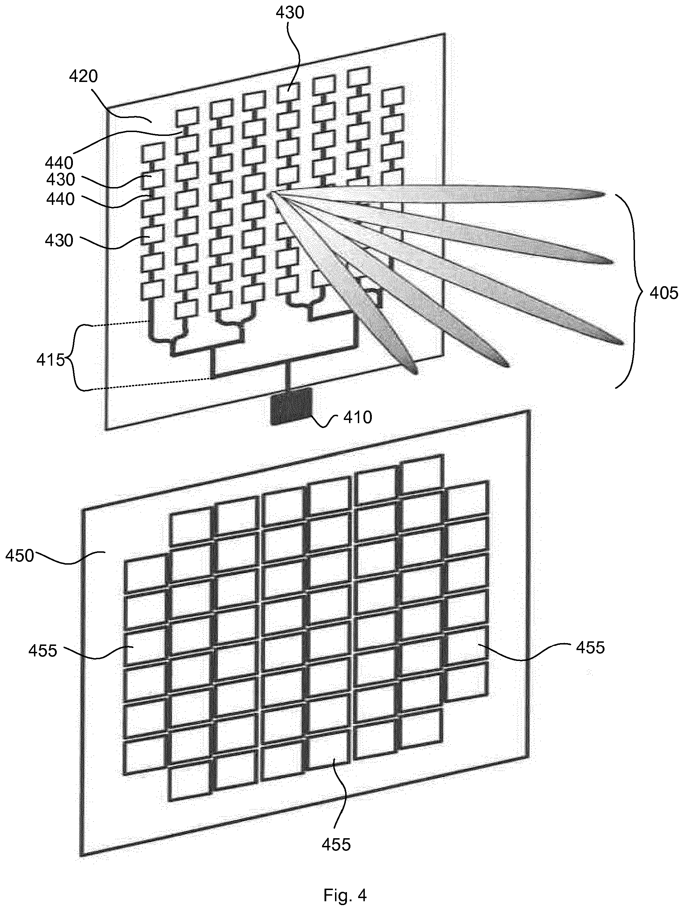

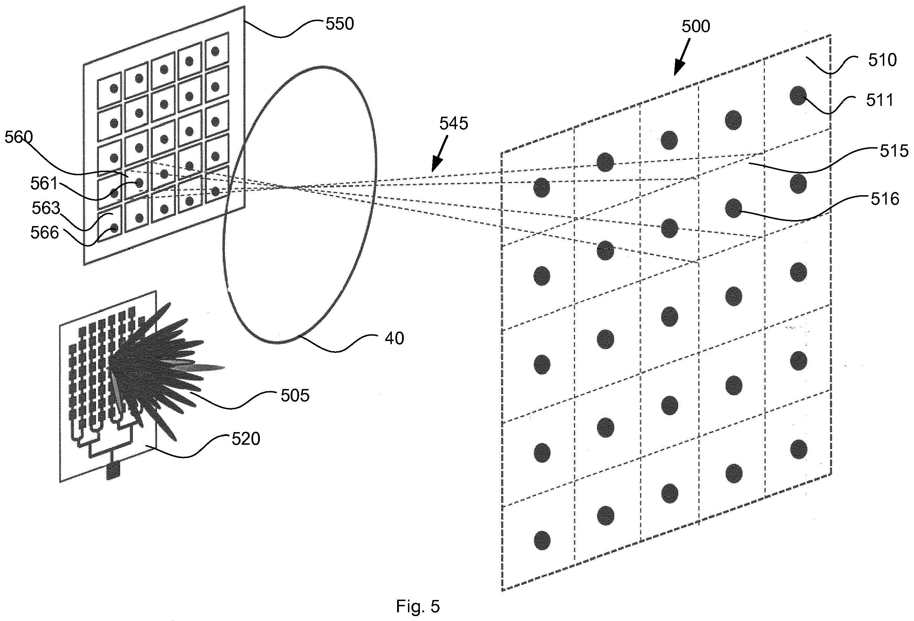

In some embodiments the optical phased array is configured for steering the plurality of beams, schematically represented by arrows 25A-25D. In some embodiments, the plurality of beams is shaped as a fan of beams which originate from the optical phase array and fan out (i.e, radiate) from the optical phased array, as illustrated. This can be better seen with reference to figures 4 and 5, discussed below.

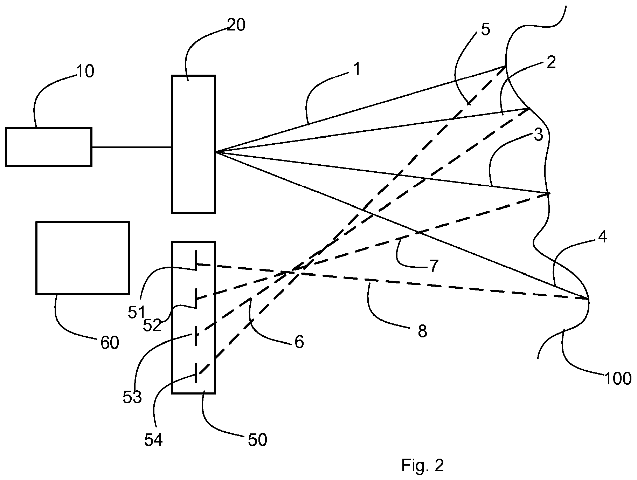

Figure 2 illustrates a simplified view of the system of Figure 1 imaging an external object 100 according to an embodiment. To avoid cluttering the figure, the optical receiving unit 40 and the signaling links to and from the controller 60 have been omitted. In this example, the beams of the fan of beams are scattered by an external object 100. In this figure a single beam of scattered light is shown to reflect from the object from each of the beams 1, 2, 3 and 4. The scattered beams are shown as dashed lines. More specifically, scattered beam 5 corresponds to beam 1, scattered beam 6 corresponds to beam 2, scattered beam 7 corresponds to beam 3, and scattered beam 8 corresponds to beam 4. Scattered light represented by beam 5 is detected by photodetector 54, scattered light represented by beam 6 is detected by photodetector 53, scattered light represented by beam 7 is detected by photodetector 52, and scattered light represented by beam 8 is detected by photodetector 51.

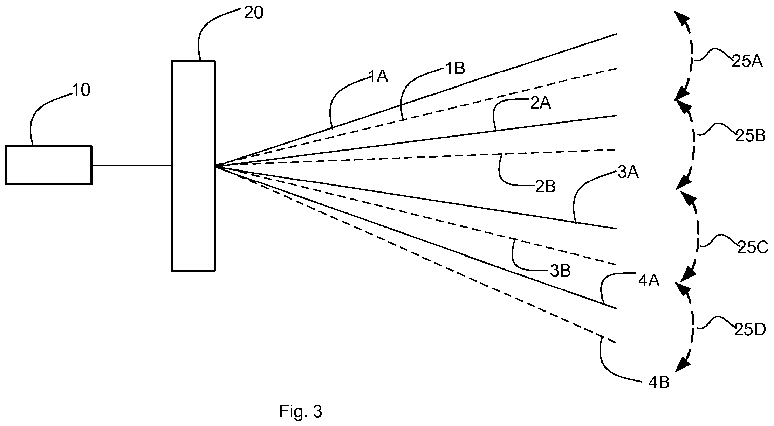

Figure 3 illustrates a scanning operation, according to an embodiment. The time-of-flight apparatus can image and range one or more objects in the entire field of view 70 by scanning the beams. For example, beam 1, shown at a first instant of time as beam 1A can be rotated through pointing angle range 25A to form beam 1B at a second instant of time. The pointing angle range represents the angle through which each beam is steered (rotated). Accordingly, beam 2, shown at a first instant of time as beam 2A can be rotated through pointing angle range 25B to form beam 2B at a second instant of time. Similarly, beam 3, shown at a first instant of time as beam 3A can be rotated through pointing angle range 25C to form beam 3B at a second instant of time. Similarly, beam 4, shown at a first instant of time as beam 4A can be rotated through pointing angle range 25D to form beam 4B at a second instant of time. In the embodiment illustrated, the optical phase array 20 is configured for steering the entire fan of beams, as each beam is moved in unison, through the pointing angles 25A-25D. The pointing angle magnitudes can be controlled by the controller 60. Accordingly, the optical phase array can be configured for steering the entire fan of beams, thus steering pointing angles of individual beams. In some embodiments at least one particular photodetector of the photodetector array is disposed for receiving scattered light from each particular one of the fan of beams as the pointing angle is scanned by the optical phase array.

Figures 1 to 3 are schematic, and only illustrate a one dimensional, i.e. a flat fan of beams, and one dimensional photodetector array. However, it should be appreciated that in some embodiments, the fan of beams is two-dimensional (2D) and the photodetector array is two-dimensional. Furthermore, embodiments are envisioned where a one-dimensional fan of beams is scanned in two perpendicular planes, and vice versa, that is, a two-dimensional fan of beams is scanned in one plane only.

Figure 4 is a three dimensional view of a 2D thinned optical phase array 420 and a 2D photodetector array 450, according to an embodiment. The thinned optical phased array 420 can be an integrated photonic chip including an array of emitters 430 and an array of tunable phase elements 440, wherein each tunable phase element 440 is coupled to a particular one of the emitters 430. The thinned optical phased array 420 receives a laser pulse through an interface 410, which couples a portion of the laser pulse to each emitter 430 through a distribution network 415 and produces a fan of beams 405 which fan or radiate outward from the plane of the thinned optical phased array 420. While only 5 such beams are illustrated in Figure 4, it should be appreciated the thinned optical phased array 420 can produce more beams, depending on its configuration, as illustrated in Figure 5. In some embodiments the optical phased array 420 is configured for varying a pointing angle of each one of the fan of beams in a single plane in order to scan one or more external objects. In some embodiments the optical phased array is configured for varying a pointing angle of each one of the fan of beams in two mutually perpendicular planes in order to scan one or more external objects. The photodetector array 450 includes an array of photodetectors 455.

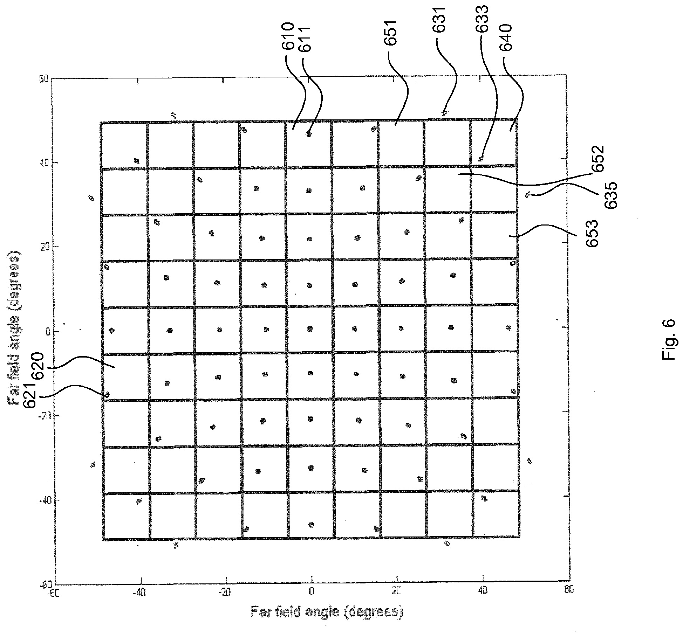

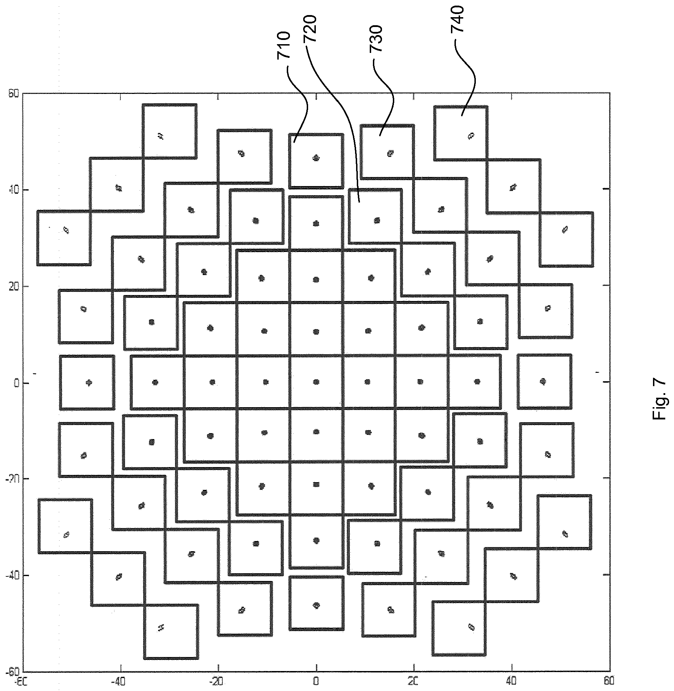

In some embodiments, at least one particular photodetector 455 of the photodetector array 450 is disposed for receiving scattered light from each particular beam of the fan of beams as the pointing angle is scanned by the optical phase array. In some embodiments, the number of photodetectors 455 is selected to correspond to the number of beams emitted by the thinned optical phase array 420. However, in other embodiments, the number of photodetectors 455 can exceed the number of produced beams, to increase the likelihood that each beam is detected. This can be important when the fan of beams is not equidistant, as accordingly scattered light from some beams may not be detected by evenly spaced detectors. In some embodiments, rather than increasing the number of detectors, the placement of the detectors can be altered from an evenly spaced photodetector array. This will be discussed below with reference to figures 6 and 7.

Figure 5 illustrates a 2D photodetector array 550 detecting scattered light from multiple beams emitted by a 2D thinned optical phase array 520, according to an embodiment. In this figure, photodetector array 550 includes a 5x5 array of photodetectors, and the 2D thinned optical phase array 420 produces a fan of beams 505 which includes 25 beams which radiate towards an external object 500. In this schematic example, the external object 500 is a wall disposed in a field of view of photodetector array 550 at some distance from the optical receiving unit 40. Accordingly, in Figure 5, the wall 500 is subdivided into a 5x5 set of dashed squares, with each dashed square representing a field of view of a corresponding photodetector of the photodetector array 550. For example, a dashed square 515 corresponds to a field of view of photodetector 560, schematically illustrated by dashed lines 545. As another example, a dashed square 510 corresponds to a field of view of photodetector 563. The black dots represent particular beams of light striking the wall 500, and the corresponding scattered light from each beam striking a photodetector. For example, a dot 511 represents one of the beams of the fan of beams 505 striking the object 500. As dot 511 strikes the object within the dashed square 510, scattered light from this beam will be focused by the optical receiving unit 40 onto the photodetector 563 at dot 566. As another example, dot 516 represents another one of the beams of the fan of beams 505 striking the object 500. Similarly, scattered light from this beam will be focused by the optical receiving unit 40 onto the photodetector 560 at dot 561.

In this embodiment, the thinned optical phase array 520 has an angular emission distribution including at least one main lobe and a plurality of side lobes. Herein, the term "lobe" refers to a protruding feature of the angular emission distribution of the thinned optical phase array 520. When illuminated by the laser 10, the thinned optical phase array 520 produces the fan of beams 505. The fan of beams 505 includes at least one main beam emitted in a corresponding at least one main lobe, and a number of side beams emitted in corresponding side lobes. In some embodiments, the photodetector array and or the optical receiving unit is configured such that each of the detectors has a position centered on the image from one of the beams 505, when the angular emission distribution is oriented along the axis normal to the plane of the thinned phase array. In some embodiments, the detector array 550 is configured such that each detector can receive scattered light from one of the beams 505. In other embodiments, the optical receiving unit 40 can include one or more custom focusing elements (e.g., lenses) to direct scattered light from each of the beams striking the wall 500 towards one of the detectors at least when a center of the angular emission distribution is oriented at a normal angle of incidence relative to the plane of the optical phased array. The lidar scanner operates by steering the fan of beams such that each detector continues to receive the scattered light originating from the corresponding beam as the beam is steered over its portion of the overall field of view. In so doing, scattered light from each beam of the fan of beams are detected by corresponding detectors of the detector array 550. For prior art systems, the side lobes effectively cause interference in the form of ghost images. However embodiments discussed herein utilize a receiver configured to enhance the ranging of the device by utilizing these ghost images, as the light scattered by the side lobe beams are imaged on their respective photodetectors.

Figures 4 and 5 illustrate embodiments in which the photodetector array 450 and 550 uniform has a uniform pitch and detector size. In this context, pitch refers to the distance between the centers of two adjacent array elements. Such a uniform detector array can suffice for some applications, depending on such factors as the required field of view and distance to be ranged.

However, as the field of view increases, the emission pattern deviates more and more from a rectangular array of squares by curving outward with an increasing pitch, following a pin-cushion shape. In other words, the emission pattern suffers from pincushion distortion in which the distortion increases with the distance from the optical axis. The distortion results from the direction of the lobes following a diffraction grating equation:
Sin θ = n^{∗}λ/d, wherein d is the phased array pitch, n is an integer, and λ is the center wavelength of the laser pulse.

An example distortion can be seen in Figure 6, which illustrates a 9x9 photodetector array, according to an embodiment. The axis labels the far field angles θ, Φ in degrees. Each square represents a photodetector, and each dot represents a scattered phased array lobe image received by the detector. As can be seen the dots in the center for the array are received in the center of each detector. However as the distance from center increases, the position of the dots shifts. For example, photodetector 610 is central in the vertical direction, but at the periphery in the horizontal direction. The received image from the corresponding phased array lobe, as illustrated by dot 611 is similarly shifted in the horizontal direction. Photodetector 620 is at the periphery in the vertical direction and off center in the horizontal direction. The received image from the corresponding phased array lobe, as illustrated by dot 621 is shifted towards the top left corner of the detector. Further, dots 631, 633 and 635 miss the detectors 651, 652 and 653 respectively. Dot 633, which in a uniform distribution would strike detector 652, instead strikes detector 640, while dots 631 and 635 are not detected by any of the photodetectors of the photodetector array.

Accordingly, some embodiments utilize a non-uniform photodetector array to compensate for such distortion. Such a photodetector array can be non-uniform in size and/or position of the photodetectors. In some embodiments, the detector array is physically configured to follow the pattern of the emitted lobes. In some embodiments, the photodetector array has a varying pitch of photodetectors corresponding to the fan of beams, such that the photodetectors form a pincushion pattern.

For example, in one embodiment the detector array in which the detectors positioned away from the center are offset in a pin-cushion grid shape, so as to be positioned to receive the reflected light from the emitted lobes. Figure 7 illustrates one example of a non-uniform detector array, according to an embodiment. In this example, all of the detectors are the same size, but the position of the detectors is varied with distance from the center of the photodetector array. In this example, each detector position is centered on the image grating lobe. Accordingly, by way of example, detectors 710, 720, 730 and 740 each have different pitches, and thus offsets from each other. It is noted that these offsets represent gaps between the photodetectors, which could result in blind spot, in which scattered light is not detected. Accordingly, some embodiments could utilize different sized detectors to reduce such blind spots.

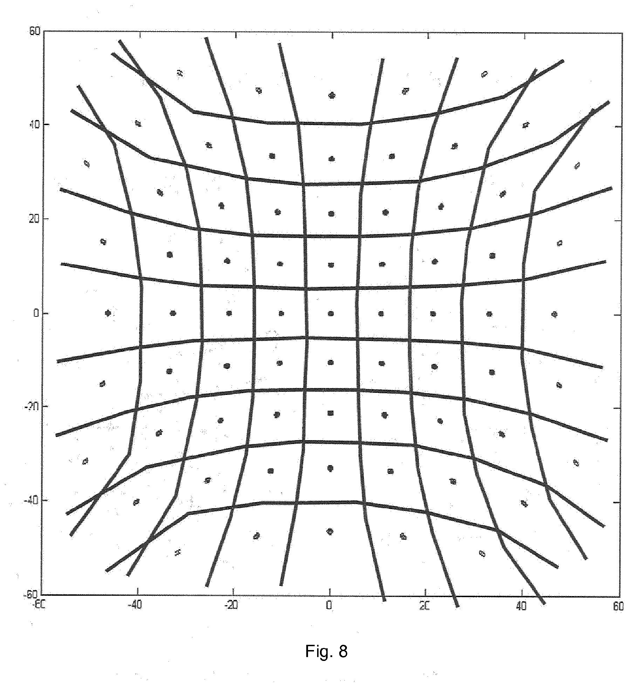

Figure 8 illustrates another embodiment which utilizes a polar grid detector array. In such a polar grid detector array, the individual detectors are not evenly sized, but are stretched as the detectors are positioned away from the center. Accordingly the polar grid detector array can be configured to match the pin cushion emission pattern of the phased array, such that the reflected lobes are properly detected by the individual detectors. In these embodiments, a single scanning range will cause all beams to fully scan their respective fields of view and detector elements.

The optical receiving unit 40 can include a focusing element or plurality of focusing elements such as a lens, a series of lenses, an array of lenses or the like. A focusing element, such as a lens, translates a beam angle into a beam coordinate at the focal plane (i.e, the plane of the photodetector array). The focusing element 40 can be designed, e.g. using ray-tracing software, to deliberately introduce a pin-cushion type of distortion to more closely match the angular distribution of the beams in the beam fan resulting from the diffraction grating equation. In one embodiment, the focusing element 40 may include an array of microlenses with varying pitch.

This may allow the utilization of a regular shaped detector array, because the focusing element 40 compensates for the distortion using a suitably configured optical receiving unit 40, as described above.

In some embodiments the controller 60 utilizes a different scanning offset and range for each beam/lobe in order for an external object to be accurately scanned. In some such embodiments, the lidar scanner can scan over a larger range than required for the near-normal-axis detectors, and determine the position of each of the lobes on the detector array for each of the scanning steps, either by using a mathematical relationship or by calibration.

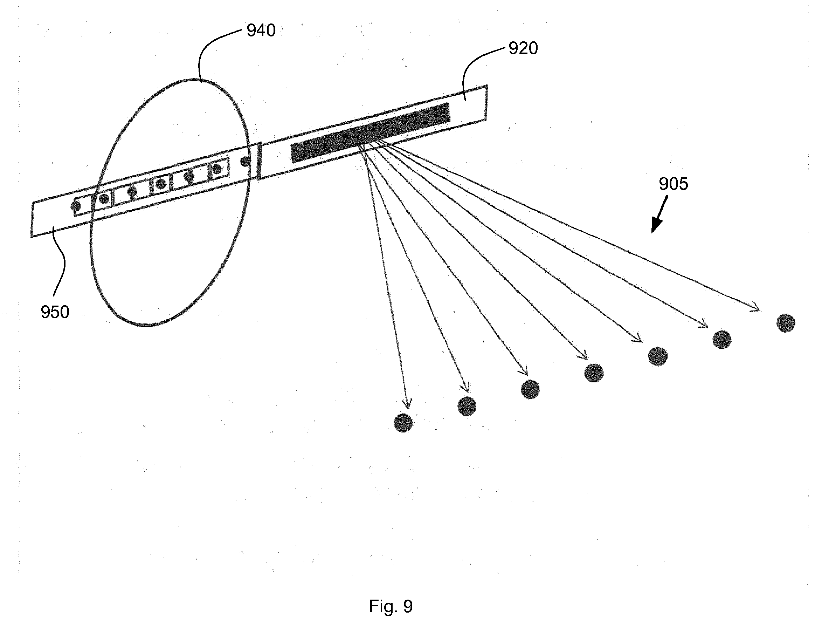

It is noted that the above examples assume a square photodetector array. However, other embodiments can utilize an NxM photodetector array. Furthermore, M can be one, in which case a one-dimensional array is utilized. Figure 9 illustrates an apparatus, including a one-dimensional optical phased array 920 for producing a one-dimensional fan of beams 905, that is a fan of beams propagating in a single plane, and a receiver including an optical receiving unit 940 and a one dimensional photodetector array 950.

The operation of controller 60 will now be discussed, according to an embodiment, with further reference to Figure 1. The controller 60 can include a processor and machine readable memory which stores machine readable instructions which, when executed by the processor, cause the system to operate as described herein. The controller 60 can cause the laser to transmit the laser pulse, for example via signaling link 61. The controller 60 can also cause the optical phase array 20 to steer the fan of beams through a predetermined range of pointing angles. Further, the controller 60 can be configured to receive signals from individual photodetectors of the photodetector array via signaling 64. The signals correspond to the scattered light from each particular one of the beams. The controller 60 is further configured to determine, from the corresponding signals, arrival times of the scattered light from each particular one of the beams.

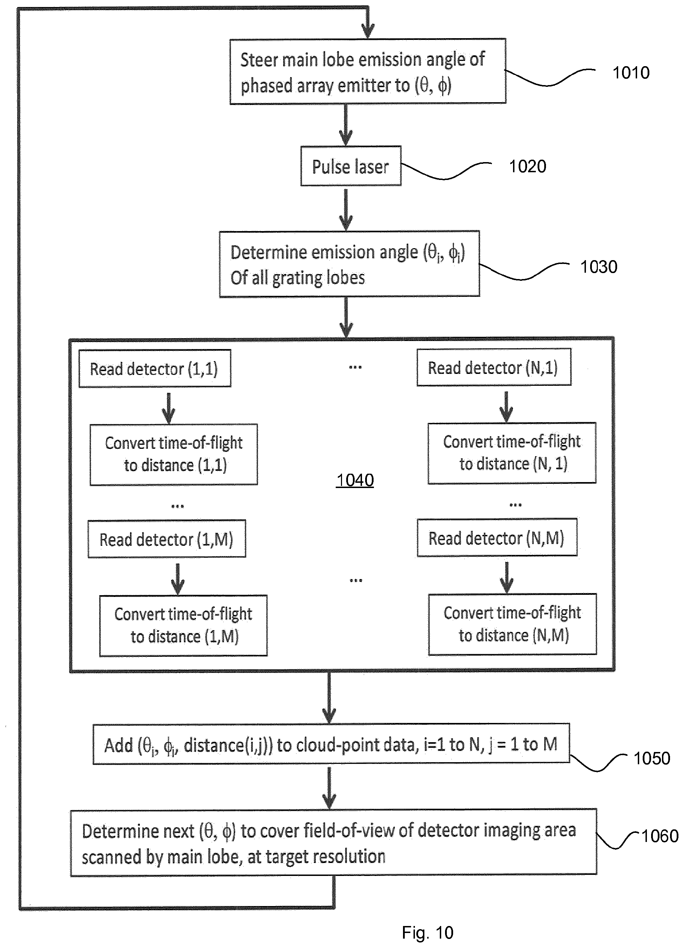

A method executed by the controller 60 is illustrated in Figure 10, according to an embodiment. At step 1010 the controller steers an emission angle of the thinned optical phased array to (θ, Φ). The controller than causes the laser to pulse 1020. It is noted that, the order of these two steps can be inverted. At step 1030 the controller determines the emission angles (θᵢ, Φᵢ₎ of all phased array lobes. At steps 1040 the controller receives signals from each photodetector of an NxM photodetector array and converts the arrival times of each detector signal to distance. In other words the controller converts the time-of-flight to distance for each photodetector, because the arrival time for each photodetector signal is representative of time-of-flight. Once this is done for each received signal, the controller adds θᵢ, Φᵢ distance (i, j) to cloud-point data for i=1 to N, j = 1 to M. at step 1050. The controller than determines the next (θ, Φ) to scan the field-of-view of the photodetector array imaging area scanned by the main lobe, for the target resolution at step 1060.

Accordingly, embodiments utilize a multi-lobe optical phased array emitter conjointly with a detector array configured to have the same number of elements as the number of emission lobes. This depends on the spacing of the individual detectors of the detector array. As opposed to the mechanical lidar, each of the beams/lobes is scanned over the detector elements field-of-view instead of having a static relationship with it.

Although the present disclosure has been described with reference to specific features and embodiments thereof, it is evident that various modifications and combinations can be made thereto without departing from the disclosure. The specification and drawings are, accordingly, to be regarded simply as an illustration of the disclosure as defined by the appended claims, and are contemplated to cover any and all modifications, variations, combinations or equivalents that fall within the scope of the present disclosure.

## Claims

1. A time-of-flight apparatus comprising:
a transmitter including a laser (10) for providing a laser pulse and an optical phased array (20) coupled to the laser (10) for receiving the laser pulse and providing a plurality of beams (1, 2, 3, 4) which fan out from the optical phased array;
a receiver including an optical receiving unit (40) for receiving scattered light from the plurality of beams (1, 2, 3, 4) and a photodetector array (50) coupled to the optical receiving unit (40) and comprising a plurality of photodetectors (51, 52, 53, 54), wherein at least one particular photodetector of the photodetector array (50) is disposed for receiving scattered light from each particular one beam of the plurality of beams (1, 2, 3, 4),
wherein the plurality of beams (1, 2, 3, 4) is shaped as a fan of beams extending from the optical phased array (20),
wherein the optical phase array (20) is configured for steering the fan of beams; and wherein at least one particular photodetector of the photodetector array (50) is disposed for receiving scattered light from each particular one beam of the fan of beams while the fan of beams is steered by the optical phased array (20).

2. The time-of-flight apparatus of claim 1, wherein the fan of beams is one-dimensional or two-dimensional and wherein the photodetector array (50) is one one-dimensional or two-dimensional.

3. The time-of-flight apparatus of claim 2, wherein the photodetector array (50) has a varying pitch of photodetectors (51, 52, 53, 54) corresponding to the fan of beams, such that the photodetectors (51, 52, 53, 54) form a pincushion pattern.

4. The time-of-flight apparatus of any one of claims 1-3, wherein the optical phased array (20) is configured for varying a pointing angle of the fan of beams in a single plane or in two mutually perpendicular planes.

5. The time-of-flight apparatus of any one of claims 1-4, wherein the optical receiving unit (40) comprises a plurality of lenses optically coupled to the photodetector array (50).

6. The time-of-flight apparatus of claim 2, wherein the photodetector array (50) has a varying pitch of the photodetectors (51, 52, 53, 54) to match the fan of beams.

7. The time-of-flight apparatus of any one of claims 1-6, wherein the optical phased array (20) comprises a thinned optical phase array.

8. The time-of-flight apparatus of any one of claims 1-7, wherein the optical phased array (20) comprises an integrated photonic chip including an array of emitters and an array of tunable phase elements, wherein each tunable phase element is coupled to a particular one of the emitters.

9. The time-of-flight apparatus of any one of claims 1-8, further comprising a controller coupled to the transmitter and configured to:
cause the laser (10) to transmit the laser pulse; and
cause the optical phased array (20) to steer the fan of beams through a predetermined pointing angle range.

10. The time-of-flight apparatus of claim 9, wherein the controller is configured to receive signals from individual photodetectors (51, 52, 53, 54) of the photodetector array (50), wherein the signals correspond to the scattered light from each particular beam of the fan of beams.

11. The time-of-flight apparatus of claim 10, wherein the controller is further configured to determine, from the corresponding signals, arrival times of the scattered light from each particular one of the beams (1, 2, 3, 4).

12. A method for time-of-flight ranging performed by an apparatus, the method comprising:
a transmitter including a laser (10) for providing a laser pulse to an optical phased array (20) coupled to the laser (10) to provide a plurality of beams (1, 2, 3, 4) which fan out from the optical phased array (20); and
receiving scattered light from the plurality of beams (1, 2, 3, 4) by a photodetector array (50) comprising a plurality of photodetectors (51, 52, 53, 54), wherein at least one particular photodetector of the photodetector array (50) is disposed for receiving scattered light from each particular one beam of the plurality of beams (1, 2, 3, 4),
wherein the plurality of beams (1, 2, 3, 4) is shaped as a fan of beams extending from the optical phased array (20),
wherein the optical phase array (20) is configured for steering the fan of beams; and wherein at least one particular photodetector of the photodetector array (50) is disposed for receiving scattered light from each particular one beam of the fan of beams while the fan of beams is steered by the optical phased array (20).

13. The method of claim 12, further comprising:
for each photodetector (51, 52, 53, 54), receiving a detector signal in response to the photodetector receiving the scattered light; and converting arrival times of each detector signal to distance.

## Patentansprüche

1. Flugzeitvorrichtung, umfassend:
einen Sender, der einen Laser (10) zum Bereitstellen eines Laserpulses und ein an den Laser (10) gekoppeltes optische phasengesteuertes Feld (20) zum Empfangen des Laserpulses und
Bereitstellen einer Vielzahl von Strahlen (1, 2, 3, 4), die sich aus dem optischen phasengesteuerten Feld auffächern, beinhaltet;
einen Empfänger, der eine optische Empfangseinheit (40) zum Empfangen von Streulicht von der Vielzahl von Strahlen (1, 2, 3, 4) und ein Photodetektorfeld (50), das an die optische Empfangseinheit (40) gekoppelt ist und eine Vielzahl von Photodetektoren (51, 52, 53, 54) umfasst, beinhaltet, wobei mindestens ein bestimmter Photodetektor des Photodetektorfelds (50) zum Empfangen von Streulicht von jedem bestimmten einen Strahl der Vielzahl von Strahlen (1, 2, 3, 4) angeordnet ist,
wobei die Vielzahl von Strahlen (1, 2, 3, 4) als ein Fächer von Strahlen geformt ist, die sich von dem optischen phasengesteuerten Feld (20) erstrecken,
wobei das optische phasengesteuerte Feld (20) zum Lenken des Fächers von Strahlen konfiguriert ist; und wobei mindestens ein bestimmter Photodetektor des Photodetektorfelds (50) zum Empfangen von Streulicht von jedem bestimmten einen Strahl des Fächers von Strahlen angeordnet ist, während der Fächer von Strahlen durch das optische phasengesteuerten Feld (20) gelenkt wird.

2. Flugzeitvorrichtung nach Anspruch 1, wobei der Fächer von Strahlen eindimensional oder zweidimensional ist und wobei das Photodetektorfeld (50) eindimensional oder zweidimensional ist.

3. Flugzeitvorrichtung nach Anspruch 2, wobei das Photodetektorfeld (50) einen variierenden Abstand von Photodetektoren (51, 52, 53, 54) aufweist, der dem Fächer von Strahlen entspricht, sodass die Photodetektoren (51, 52, 53, 54) ein Nadelkissenmuster bilden.

4. Flugzeitvorrichtung nach einem der Ansprüche 1-3, wobei das optische phasengesteuerten Feld (20) zum Variieren eines Ausrichtungswinkels des Fächers von Strahlen in einer einzelnen Ebene oder in zwei zueinander senkrechten Ebenen konfiguriert ist.

5. Flugzeitvorrichtung nach einem der Ansprüche 1-4, wobei die optische Empfangseinheit (40) eine Vielzahl von Linsen umfasst, die optisch an das Photodetektorfeld (50) gekoppelt sind.

6. Flugzeitvorrichtung nach Anspruch 2, wobei das Photodetektorfeld (50) einen variierenden Abstand der Photodetektoren (51, 52, 53, 54) aufweist, um dem Fächer von Strahlen zu entsprechen.

7. Flugzeitvorrichtung nach einem der Ansprüche 1-6, wobei das optische phasengesteuerten Feld (20) ein ausgedünntes optisches phasengesteuerten Feld umfasst.

8. Flugzeitvorrichtung nach einem der Ansprüche 1-7, wobei das optische phasengesteuerte Feld (20) einen integrierten photonischen Chip umfasst, der ein Feld von Emittern und ein Feld von abstimmbaren Phasenelementen beinhaltet, wobei jedes abstimmbare Phasenelement an einen bestimmten der Emitter gekoppelt ist.

9. Flugzeitvorrichtung nach einem der Ansprüche 1-8, ferner umfassend eine Steuerung, die an den Sender gekoppelt und zu Folgendem konfiguriert ist:
Veranlassen, dass der Laser (10) den Laserpuls sendet; und
Veranlassen, dass das optische phasengesteuerte Feld (20) den Fächer von Strahlen durch einen vorbestimmten Ausrichtungswinkelbereich lenkt.

10. Flugzeitvorrichtung nach Anspruch 9, wobei die Steuerung dazu konfiguriert ist, Signale von einzelnen Photodetektoren (51, 52, 53, 54) des Photodetektorfelds (50) zu empfangen, wobei die Signale dem Streulicht von jedem einzelnen Strahl des Fächers von Strahlen entsprechen.

11. Flugzeitvorrichtung nach Anspruch 10, wobei die Steuerung ferner dazu konfiguriert ist, aus den entsprechenden Signalen Ankunftszeiten des Streulichts von jedem bestimmten der Strahlen (1, 2, 3, 4) zu bestimmen.

12. Verfahren zur Flugzeitmessung, das durch eine Vorrichtung durchgeführt wird, wobei das Verfahren Folgendes umfasst:
einen Sender, der einen Laser (10) zum Bereitstellen eines Laserpulses an ein optisches phasengesteuertes Feld (20), das an den Laser (10) gekoppelt ist, um eine Vielzahl von Strahlen (1, 2, 3, 4) bereitzustellen, die sich aus dem optischen phasengesteuerten Feld (20) auffächern, beinhaltet; und
Empfangen von Streulicht von der Vielzahl von Strahlen (1, 2, 3, 4) durch ein Photodetektorfeld (50), das eine Vielzahl von Photodetektoren (51, 52, 53, 54) umfasst, wobei mindestens ein bestimmter Photodetektor des Photodetektorfelds (50) zum Empfangen von Streulicht von jedem bestimmten einen Strahl der Vielzahl von Strahlen (1, 2, 3, 4) angeordnet ist,
wobei die Vielzahl von Strahlen (1, 2, 3, 4) als ein Fächer von Strahlen geformt ist, die sich von dem optischen phasengesteuerten Feld (20) erstrecken,
wobei das optische phasengesteuerte Feld (20) zum Lenken des Fächers von Strahlen konfiguriert ist; und wobei mindestens ein bestimmter Photodetektor des Photodetektorfelds (50) zum Empfangen von Streulicht von jedem bestimmten einen Strahl des Fächers von Strahlen angeordnet ist, während der Fächer von Strahlen durch das optische phasengesteuerten Feld (20) gelenkt wird.

13. Verfahren nach Anspruch 12, ferner umfassend:
für jeden Photodetektor (51, 52, 53, 54) Empfangen eines Detektorsignals als Reaktion darauf, dass der Photodetektor das Streulicht empfängt; und Umwandeln der Ankunftszeiten jedes Detektorsignals in eine Entfernung.

## Revendications

1. Appareil de temps de vol comprenant:
un émetteur comportant un laser (10) destiné à fournir une impulsion laser et un réseau optique à commande de phase (20) couplé au laser (10) destiné à recevoir l'impulsion laser et à fournir une pluralité de faisceaux (1, 2, 3, 4) qui se déploient à partir du réseau optique à commande de phase ;
un récepteur comportant une unité de réception optique (40) destiné à recevoir la lumière diffusée provenant de la pluralité de faisceaux (1, 2, 3, 4) et un réseau de photodétecteurs (50) couplé à l'unité de réception optique (40) et comprenant une pluralité de photodétecteurs (51, 52, 53, 54), dans lequel au moins un photodétecteur spécifique du réseau de photodétecteurs (50) est disposé pour recevoir la lumière diffusée provenant de chaque faisceau spécifique parmi la pluralité de faisceaux (1, 2, 3, 4),
dans lequel la pluralité de faisceaux (1, 2, 3, 4) a la forme d'un éventail de faisceaux s'étendant depuis le réseau optique à commande de phase (20),
dans lequel le réseau optique à commande de phase (20) est conçu pour diriger l'éventail de faisceaux ; et dans lequel au moins un photodétecteur spécifique du réseau de photodétecteurs (50) est disposé pour recevoir la lumière diffusée provenant de chaque faisceau spécifique parmi l'éventail de faisceaux tandis que l'éventail de faisceaux est dirigé par le réseau optique à commande de phase (20).

2. Appareil de temps de vol selon la revendication 1, dans lequel l'éventail de faisceaux est unidimensionnel ou bidimensionnel et dans lequel le réseau de photodétecteurs (50) est unidimensionnel ou bidimensionnel.

3. Appareil de temps de vol selon la revendication 2, dans lequel le réseau de photodétecteurs (50) a un pas variable de photodétecteurs (51, 52, 53, 54) correspondant à l'éventail de faisceaux, de sorte que les photodétecteurs (51, 52, 53, 54) forment un motif en pelote à épingles.

4. Appareil de temps de vol selon l'une quelconque des revendications 1 à 3, dans lequel le réseau optique à commande de phase (20) est conçu pour faire varier un angle de pointage de l'éventail de faisceaux dans un seul plan ou dans deux plans mutuellement perpendiculaires.

5. Appareil de temps de vol selon l'une quelconque des revendications 1 à 4, dans lequel l'unité de réception optique (40) comprend une pluralité de lentilles optiquement couplées au réseau de photodétecteurs (50)

6. Appareil de temps de vol selon la revendication 2, dans lequel le réseau de photodétecteurs (50) a un pas variable des photodétecteurs (51, 52, 53, 54) pour correspondre à l'éventail de faisceaux.

7. Appareil de temps de vol selon l'une quelconque des revendications 1 à 6, dans lequel le réseau optique à commande de phase (20) comprend un réseau optique à commande de phase aminci.

8. Appareil de temps de vol selon l'une quelconque des revendications 1 à 7, dans lequel le réseau optique à commande de phase (20) comprend une puce photonique intégrée comportant un réseau d'émetteurs et un réseau d'éléments de phase accordables, dans lequel chaque élément de phase accordable est couplé à un émetteur spécifique parmi les émetteurs.

9. Appareil de temps de vol selon l'une quelconque des revendications 1 à 8, comprenant en outre un dispositif de commande couplé à l'émetteur et conçu pour :
amener le laser (10) à transmette l'impulsion laser ; et
amener le réseau optique à commande de phase (20) à diriger l'éventail de faisceaux sur une plage d'angles de pointage prédéterminée.

10. Appareil de temps de vol selon la revendication 9, dans lequel le dispositif de commande est conçu pour recevoir des signaux provenant de photodétecteurs individuels (51, 52, 53, 54) du réseau de photodétecteurs (50), dans lequel les signaux correspondent à la lumière diffusée provenant de chaque faisceau spécifique parmi l'éventail de faisceaux.

11. Appareil de temps de vol selon la revendication 10, dans lequel le dispositif de commande est en outre conçu pour déterminer, à partir des signaux correspondants, les heures d'arrivée de la lumière diffusée provenant de chaque faisceau spécifique parmi les faisceaux (1, 2, 3, 4).

12. Procédé de télémétrie de temps de vol réalisé par un appareil, le procédé comprenant :
un émetteur comportant un laser (10) destiné à fournir une impulsion laser à un réseau optique à commande de phase (20) couplé au laser (10) pour fournir une pluralité de faisceaux (1, 2, 3, 4) qui se déploient à partir du réseau optique à commande de phase (20) ; et
la réception de la lumière diffusée provenant de la pluralité de faisceaux (1, 2, 3, 4) par un réseau de photodétecteurs (50) comprenant une pluralité de photodétecteurs (51, 52, 53, 54), dans lequel au moins un photodétecteur spécifique du réseau de photodétecteurs (50) est disposé pour recevoir la lumière diffusée provenant de chaque faisceau spécifique parmi la pluralité de faisceaux (1, 2, 3, 4),
dans lequel la pluralité de faisceaux (1, 2, 3, 4) a la forme d'un éventail de faisceaux s'étendant depuis le réseau optique à commande de phase (20),
dans lequel le réseau optique à commande de phase (20) est conçu pour diriger l'éventail de faisceaux ; et dans lequel au moins un photodétecteur spécifique du réseau de photodétecteurs (50) est disposé pour recevoir la lumière diffusée provenant de chaque faisceau spécifique parmi l'éventail de faisceaux tandis que l'éventail de faisceaux est dirigé par le réseau optique à commande de phase (20).

13. Procédé selon la revendication 12, comprenant en outre :
pour chaque photodétecteur (51, 52, 53, 54), la réception d'un signal de détecteur en réponse à la réception par le photodétecteur de la lumière diffusée ; et la conversion d'heures d'arrivée de chaque signal de détecteur en distance.
